# EUROPÄISCHE PATENTSCHRIFT

(11) **EP 4 249 858 B1**
(45) Veröffentlichungstag und Bekanntmachung des Hinweises auf die Patenterteilung: **22.10.2025**
(21) Anmeldenummer: 23155035.1
(22) Anmeldetag: 06.02.2023
(51) Int. Cl.: G01D 21/00

(54) **SYSTEM ZUM BETREIBEN EINER PHYSISCHEN MESSKETTE**
SYSTEM FOR OPERATING A PHYSICAL MEASURING CHAIN
SYSTÈME DE FONCTIONNEMENT D'UNE CHAÎNE DE MESURE PHYSIQUE

(30) Priorität: 21.03.2022 EP 22163281
(43) Veröffentlichungstag der Anmeldung: 27.09.2023
(73) Patentinhaber: Kistler Holding AG, 8408 Winterthur (CH)
(72) Erfinder: Wuhrmann, Thomas, 8500 Frauenfeld (CH); Stierli, Martin, 8820 Wädenswil (CH); Hunziker, Josua, 8274 Tägerwilen (CH)

(56) Entgegenhaltungen:
- DE-A1- 102012 101 181
- DE-A1- 2 855 746
- US-A1- 2021 333 134
- US-A1- 2021 336 629

## Beschreibung

### Technisches Gebiet

Die Erfindung betrifft ein System zum Betreiben einer physischen Messkette nach dem Oberbegriff des unabhängigen Anspruchs.

### Stand der Technik

Die Schrift WO2019105693A1 betrifft eine physische Messkette zur Messung einer physikalischen Messgrösse. Die physikalische Messgrösse kann eine Kraft, ein Gewicht, eine Temperatur, usw. sein. Die physische Messkette weist mehrere physische Messglieder wie einen physischen Sensor, ein physisches Übertragungsmittel und eine physische Auswerteeinheit auf. Zur Veranschaulichung der Funktionsweise der physischen Messkette wird beispielhaft die Messung der Temperatur an einem Messort beschrieben. Dazu wird der physische Sensor in Form eines Thermoelements am Messort angeordnet und misst die Temperatur als elektrische Spannung. Die elektrische Spannung wird über das physische Übertragungsmittel in Form eines Signalkabels als Messsignal zur physischen Auswerteeinheit übermittelt. Die physische Auswerteeinheit verstärkt das Messsignal elektrisch und stellt es auf einer Anzeige als Messwert dar. Direkt benachbarte physische Messglieder der physischen Messkette stehen für die Messung der physikalischen Messgrösse in einer Ursache-Wirkung-Beziehung zueinander.

Bevor eine Messung der physikalischen Messgrösse erfolgen kann, muss die physische Messkette konfiguriert werden. Mit dem Substantiv "Konfiguration" wird die technische Anpassung der physischen Messglieder zueinander bezeichnet. Dazu werden Konfigurationsparameter verwendet. Um beim Beispiel der Temperaturmessung am Messort zu bleiben, hier gibt es verschiedene Typen von Thermoelementen, welche die Temperatur mit unterschiedlicher Empfindlichkeit messen. Je nach Empfindlichkeit ist die gemessene elektrische Spannung anders. Auch kann das Signalkabel verschieden lang sein, was zu unterschiedlich grossen Spannungsabfällen des Messsignals im Signalkabel führt. Schliesslich muss auch die Verstärkung des Messsignals in der physischen Auswerteeinheit auf die Empfindlichkeit des verwendeten Thermoelements angepasst sein. Nur wenn die verschiedenen Konfigurationsparameter der physischen Messkette technisch korrekt zueinander angepasst sind, kann die physische Messkette die physikalische Messgrösse genau messen.

Eine solche technisch korrekte Konfiguration der physische Messkette ist für den Benutzer der physischen Messkette jedoch mit zeitlichem und materiellem Aufwand verbunden. Denn oft sind die technischen Unterlagen mit den benötigten Konfigurationsparametern der einzelnen physischen Messglieder beim Benutzer verteilt abgelegt und schwer auffindbar. Auch ist die Ursache-Wirkung-Beziehung der physischen Messglieder zueinander, und somit auch der Einfluss der Konfigurationsparameter, vom Benutzer in vielen Fällen nicht richtig verstanden. Schliesslich müssen die Konfigurationsparameter von einer Konfigurationssoftware eingelesen werden. Wenn der Benutzer dazu die Konfigurationsparameter über eine Tastatur per Hand eingibt, besteht die Gefahr der Tippfehler. Bei all dem gilt, jede Fehlkonfiguration der physischen Messkette führt zu einer falschen Messung der physikalischen Messgrösse.

Die Schrift DE102012101181A1 betrifft eine Aufsteckerkennungseinrichtung zum Erkennen eines Sensors an einer Messeinrichtung. Der Sensor weist einen Transducer Electronic Data Sheet (TEDS) auf. Im TEDS sind Arbeitsparameter des Sensors als Daten gespeichert. Der Sensor ist über eine Zweidrahtverbindung mit der Messeinrichtung verbunden. Eine Datenkommunikation zwischen dem Sensor und der Messeinrichtung und eine Stromversorgung des Sensors erfolgt über diese Zweidrahtverbindung. Die Messeinrichtung weist eine Erfassungseinrichtung auf, welche zum Erfassen eines Versorgungsstroms des mit der Messeinrichtung verbundenen Sensors vorgesehen ist.

Die Schrift US2021336629A1 bezieht sich auf ein Messsystem mit mehreren Analog-To-Digital Convertern (ADC), wobei jeder ADC einen Signaleingang und einen Signalausgang und eine Mehrzahl von Verstärkungsstufen aufweist. Das Messsystem weist eine Mischeinrichtung auf, um die mehreren Signalausgänge zu einem Signalausgang zu mischen.

Aufgabe der vorliegenden Erfindung ist es, den Benutzer der physischen Messkette bei der korrekten Konfiguration der physischen Messkette zu unterstützen, damit dieser die technisch korrekte Konfiguration der physischen Messkette mit geringem zeitlichen und materiellen Aufwand durchführen kann und er keine Gefahr läuft, dass die physische Messkette fehlkonfiguriert wird.

### Darstellung der Erfindung

Diese Aufgabe wird durch die Merkmale des unabhängigen Anspruchs gelöst.

Die Erfindung betrifft ein System zum Betreiben einer physischen Messkette, welche physischen Messkette ausgebildet ist, an einem Messort eine physikalische Messgrösse zu messen; welche physische Messkette mehrere physische Messglieder aufweist, welche physischen Messglieder in einer Ursache-Wirkung-Beziehung zueinander stehen; welche physischen Messglieder mindestens einen physischen Sensor, mindestens ein physisches Übertragungsmittel und mindestens eine physische Auswertereinheit umfassen; wobei jedes physische Messglied einen Identifikator mit einem darin gespeicherten Identifikationscode aufweist; wobei das System mindestens ein Identifikationsmittel aufweist, welches Identifikationsmittel am Messort angeordnet ist und ausgebildet ist, von jedem physischen Messglied den im Identifikator gespeicherten Identifikationscode zu erfassen; wobei das System mindestens eine Datenverarbeitungseinheit aufweist, welche Datenverarbeitungseinheit an einem messortfernen Datenverarbeitungsort angeordnet ist; wobei das System ein Datennetz aufweist, welches Datennetz die erfassten Identifikationscodes an die Datenverarbeitungseinheit übermittelt; wobei die Datenverarbeitungseinheit mindestens einen Datenprozessor mit mindestens einer Software und mindestens einen Datenspeicher mit Messglieddaten aufweist; wobei die Software ausgebildet ist, für übermittelte Identifikationscodes Messglieddaten aus dem Datenspeicher auszulesen und mit den ausgelesenen Messglieddaten eine digitale Messkette zu erzeugen; wobei die digitale Messkette mehrere digitale Messglieder aufweist, welche digitalen Messglieder mindestens einen digitalen Sensor, mindestens ein digitales Übertragungsmittel und mindestens eine digitale Auswertereinheit umfassen; und wobei das System mindestens eine Computereinheit aufweist, welche am Messort angeordnet ist, welches Datennetz die digitale Messkette an die Computereinheit übermittelt.

Erfindungsgemäss wird für eine beim Benutzer an einem Messort vorhandene physische Messkette von einer Datenverarbeitungseinheit an einem messfernen Datenverarbeitungsort eine digitale Messkette erzeugt. Das Vorgehen ist ausgesprochen benutzerfreundlich. Am Messort müssen von den einzelnen physischen Messgliedern lediglich Identifikationscodes erfasst und an die Datenverarbeitungseinheit übermittelt werden. Das ist alles. Mit den Identifikationscodes werden in der Datenverarbeitungseinheit in einem Datenspeicher gespeicherte Messglieddaten ausgelesen und mit den Messglieddaten wird die digitale Messkette erzeugt. Die digitale Messkette wird dann an eine Computereinheit am Messort übermittelt. Die übermittelte digitale Messkette und ihre digitalen Messglieder sind eine digitale Darstellung der physischen Messkette mit den physischen Messgliedern beim Benutzer. Somit wird es dem Benutzer einfach gemacht, die physische Messkette technisch korrekt zu konfigurieren, denn mit der digitalen Messkette werden dem Benutzer auch alle benötigten Konfigurationsparameter zur Verfügung gestellt.

Vorteilhafte Ausführungsformen der Erfindung werden in den abhängigen Ansprüchen beansprucht.

In einer vorteilhaften Ausführungsform weist jedes physische Messglied als Identifikator einen TEDS auf; wobei das Identifikationsmittel von jedem physischen Messglied den im TEDS gespeicherten Identifikationscode automatisch erfasst; wobei das Datennetz die erfassten Identifikationscodes automatisch an die Datenverarbeitungseinheit übermittelt; wobei die Software ausgebildet ist, für übermittelte Identifikationscodes Messglieddaten automatisch aus dem Datenspeicher auszulesen und mit den ausgelesenen Messglieddaten automatisch eine digitale Messkette zu erzeugen; und wobei das Datennetz die digitale Messkette automatisch an die Computereinheit übermittelt.

Ein TEDS umfasst einen Datenspeicher mit einer darin gespeicherten Identifikationscode, welche gemäss dem Standard IEEE 1451 vom Identifikationsmittel automatisch erfassbar ist. Das Adjektiv "automatisch" ist so zu verstehen, dass das System selbsttätig arbeitet, ohne dass der Benutzer am Messort oder ein menschlicher Operator am Datenverarbeitungsort tätig ist. Wenn nun jedes physische Messglied einen TEDS aufweist, kann das Identifikationsmittel die Identifikationscodes aller physischen Messglieder automatisch erfassen und auch die Übermittlung der erfassten Identifikationscodes an die Datenverarbeitungseinheit und das Auslesen der Messglieddaten und die Erzeugung der digitalen Messkette mit den ausgelesenen Messglieddaten kann automatisch erfolgen. Schliesslich wird die so erzeugte digitale Messkette auch automatisch an die Computereinheit übermittelt. Diese automatische Bereitstellung der digitalen Messkette macht es dem Benutzer besonders einfach, die physische Messkette technisch korrekt zu konfigurieren.

In einer vorteilhaften Ausführungsform weist die Computereinheit mindestens einen Computerdatenprozessor mit mindestens einer Computersoftware und mindestens ein Computereingabemittel auf; wobei über das Computereingabemittel mindestens ein Arbeitspunkt eingebbar ist; wobei die Computersoftware ausgebildet ist, der übermittelten digitalen Messkette für den eingegebenen Arbeitspunkt mindestens einen Konfigurationsparameter automatisch zu entnehmen.

In einer weiteren Vereinfachung der technisch korrekten Konfiguration der physischen Messkette wird dem Benutzer aus den digitalen Messkette automatisch ein Konfigurationsparameter entnommen und bereitgestellt.

In einer vorteilhaften Ausführungsform ist die Computersoftware ausgebildet, die physische Messkette mit dem Konfigurationsparameter automatisch zu konfigurieren.

Somit führt das System für den Benutzer die technisch korrekten Konfiguration der physischen Messkette selbsttätig durch.

### Kurze Beschreibung der Figur

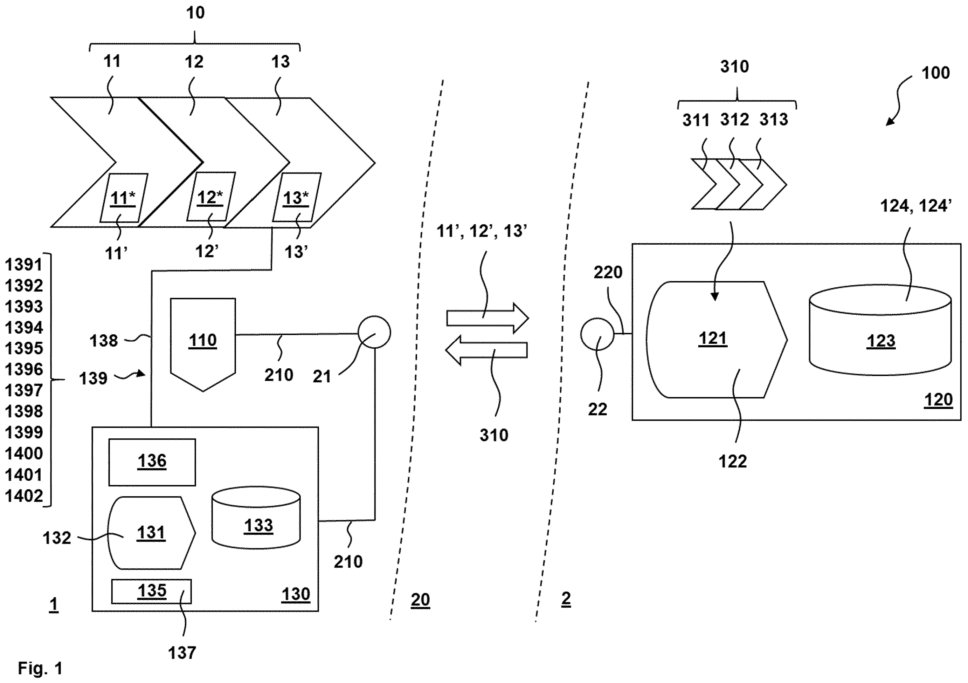

Im Folgenden wird die Erfindung beispielhaft unter Beizug der einzigen Figur 1 näher erklärt. Figur 1 zeigt schematisch eine Darstellung eines Systems 100 zum Betreiben einer physischen Messkette 10.

### Wege zur Ausführung der Erfindung

Fig. 1 zeigt schematisch eine physische Messkette 10. Die physische Messkette 10 wird von einem Benutzer benutzt. Die physische Messkette 10 ist ausgebildet, an einem Messort 1 eine physikalische Messgrösse zu messen. Der Messort 1 kann ein beliebiger Ort sein, an dem sich ein Forschungslabor, eine Fabrikhalle, ein Fahrzeug, usw. befindet. Eine Begrenzung des Messorts 1 ist in Fig. 1 als gestrichelte gebogene Linie dargestellt. Die physikalische Messgrösse kann eine Kraft, ein Gewicht, eine Temperatur, usw. sein.

Die physische Messkette 10 weist mehrere physische Messglieder 11, 12, 13 auf. Mit dem Adjektiv "physisch" wird betont, dass die Messglieder 11, 12, 13 gegenständlich, greifbar vorhanden sind. Direkt benachbarte physische Messglieder 11, 12, 13 stehen in einer Ursache-Wirkung-Beziehung zueinander. Die physischen Messglieder 11, 12, 13 umfassen mindestens einen physischen Sensor 11, mindestens ein physisches Übertragungsmittel 12 und mindestens eine physische Auswertereinheit 13.

Der physische Sensor 11 kann ein Drucksensor, ein Beschleunigungssensor, ein Temperatursensor, usw. sein. Der physische Sensor 11 misst dementsprechend als physikalische Messgrösse einen Druck, eine Beschleunigung, eine Temperatur, usw. und erzeugt für die gemessene physikalische Messgrösse ein Messsignal wie einen elektrischen Strom, eine elektrische Spannung, usw.

Für einen physischen Sensor 11 in der Ausführungsform eines piezoelektrischen Sensors oder eines piezoresistiven Sensors ist das Messsignal proportional zur physikalischen Messgrösse.

Der piezoelektrische Sensor erzeugt als Messsignal eine elektrische Ladungsmenge. Die Messempfindlichkeit des piezoelektrischen Sensors ist sehr hoch und beträgt einige pC/N. Die Messempfindlichkeit ändert sich jedoch mit der Umgebungstemperatur und dem Alter des piezoelektrischen Sensors. Zudem ist das Messsignal nur näherungsweise proportional zur physikalischen Messgrösse, die Linearitätsabweichung von der Proportionalität des piezoelektrischen Sensors oder des piezoresistiven Sensors beträgt typischerweise 1% Skalenendwert (Full Scale Output oder FSO). Schliesslich müssen piezoelektrische Sensoren mit einer Vorspannkraft mechanisch vorgespannt werden. Je nach Grösse der Vorspannkraft ändert sich jedoch die Empfindlichkeit des piezoelektrischen Sensors. Auch ändert sich die Grösse der Vorspannkraft aufgrund von unterschiedlichen Ausdehnungskoeffizienten der an der mechanischen Vorspannung beteiligten Komponenten des piezoelektrischen Sensors mit der Temperatur.

Der piezoresistive Sensor verwendet eine Brückenschaltung mit Brückenwiderständen auf Siliziumbasis. Die physikalische Messgrösse dehnt die Brückenschaltung, dadurch ändert sich ein elektrischer Widerstand der Brückenschaltung. Das Messsignal ist eine elektrische Spannung. Die Dehnung keine eine Axialdehnung, eine Biegedehnung, eine Scherdehnung, usw. sein. Üblicherweise weist der piezoresistive Sensor mehrere miteinander kombinierbare Brückenschaltungen auf. Die Brückenschaltungen können Vollbrücken, Halbbrücke oder Viertelbrücken sein. Bei Kenntnis der zu messenden physikalischen Messgrösse kann eine spezifische Kombination von Brückenschaltungen ausgewählt werden, welche beispielsweise nur Axialdehnung, aber keine Biegedehnung misst. Die Änderung der Temperatur hat einen Einfluss auf das Messsignal. Zur Kompensation der Temperaturabhängigkeit kann neben dem Messsignal der die physikalische Messgrösse messende Brückenschaltung auch ein Messignal einer die physikalische Messgrösse nicht messenden Brückenschaltung ausgewertet werden.

Im Unterschied zum piezoresistiven Sensor kann ein piezoelektrischer Sensor eine zeitlich sich rasch ändernde physikalische Messgrösse bis zu einer Grenzfrequenz von 100kHz messen. Die Grenzfrequenz wird im Wesentlichen durch die Eigenfrequenz des piezoelektrischen Sensors bestimmt, die bei bis zu 500kHz liegen kann. Je mehr sich die Messfrequenz der Eigenfrequenz nähert, desto stärker ist der durch Resonanz hervorgerufene störende Einfluss der Eigenfrequenz auf das Messsignal. Der piezoelektrische Sensor weist dafür einen deutlich grösseren Messbereich auf als der piezoresistive Sensor.

Im Unterschied zum piezoelektrischen Sensor weist ein piezoresistiver Sensor keine Ladungsdrift auf und kann eine sich zeitlich wenig ändernde physikalische Messgrösse über lange Zeiträume messen.

Das physische Übertragungsmittel 12 kann ein Signalkabel, eine Funkverbindung, usw. sein. Das physische Übertragungsmittel 12 überträgt das Messsignal vom physischen Sensor 11 zur physischen Auswertereinheit 13. Bei piezoelektrischen Sensoren und für ein physisches Übertragungsmittel 12 in der Ausführungsform eines Signalkabels beeinflussen die Kabellänge, die Kabelkapazität und die Kabelinduktivität die obere Grenzfrequenz der Messung der physikalischen Messgrösse wesentlich. Bei zunehmender Messfrequenz wächst der induktive Widerstand und sinkt der kapazitive Widerstand des Signalkabels, so dass das Signalkabel einen Tiefpassfilter bildet, der die Messfrequenz ab einer oberen Grenzfrequenz nicht mehr überträgt. Auch die Kabelimpedanz eines Signalkabels hat einen Einfluss auf das Messsignal. Gerade wenn das Signalkabel nicht mit einem Wellenwiderstand abgeschlossen ist, ändert sich die Kabelimpedanz am Eingang des Signalkabels.

Die physische Auswerteeinheit 13 wertet das übertragene Messsignal aus. Die physische Auswerteeinheit 13 kann dazu mindestens einen elektrischen Verstärker, mindestens einen Datenprozessor, mindestens einen Datenspeicher und mindestens ein Ausgabemittel aufweisen. Der elektrische Verstärker kann das übertragene Messsignal elektrisch verstärken. Zur Auswertung des Messsignals eines piezoelektrischen Sensors weist die physische Auswerteeinheit 13 einen Ladungsverstärker auf. Der Ladungsverstärker wandelt die elektrische Ladungsmenge in eine elektrische Spannung. Aufgrund des endlich hohen Isolationswiderstands der physischen Messkette 10 bis zum Ladungsverstärker driftet das Messsignal mit der Zeit, die Grösse des Messsignals wird verfälscht, was als Ladungsdrift bezeichnet wird. Zur Kompensation der Ladungsdrift kann eine Zeitkonstante des Ladungsverstärkers verkleinert werden.

Die Zeitkonstante des Ladungsverstärkers muss jedoch auch ausreichend hoch dimensioniert sein, um nicht einen Hochpassfilter zu bilden, der die Messfrequenz ab einer unteren Grenzfrequenz nicht mehr überträgt. Auch kann der elektrische Verstärker das übertragene Messsignal digitalisieren. Zur Auswertung des digitalisierten Messignals ist im Datenprozessor mindestens eine Software geladen. Die Auswertung des digitalisierten Messsignals kann eine Berechnung, eine Filterung, usw. umfassen. Das digitalisierte Messsignal kann im Datenspeicher gespeichert werden. Auch kann das digitalisierte Messsignal auf dem Ausgabemittel wie einem Bildschirm dargestellt werden.

Bei Kenntnis der vorliegenden Erfindung kann der Fachmann Variationen der physische Messkette 10 realisieren:
- So kann er die Länge des physischen Übertragungsmittels 12 auf Null minimieren und die physische Auswerteeinheit 13 direkt mit dem physischen Sensor 11 verbinden.
- Auch kann der Fachmann die physische Auswerteeinheit 13 mehrteilig realisieren, in dem ein elektrischer Verstärker einer ersten physischen Auswerteeinheit 13 im physischen Sensor 11 integriert ist und der physische Sensor 11 über ein physisches Übertragungsmittel 12 mit einem Datenprozessor und einem Datenspeicher einer zweiten physischen Auswerteeinheit 13 verbunden ist. Für einen piezoelektrischen Sensor mit einem integrierten Ladungsverstärker (Integrated Electronics Piezo-Electric oder IEPE) ist das Messsignal dann eine elektrische Spannung. Der integrierte Ladungsverstärker wird über das physische Übertragungsmittel 12 mit einem elektrischen Strom von einigen mA versorgt. Für ein physisches Übertragungsmittel 12 in der Ausführungsform eines Signalkabels mit einer Kabelkapazität beeinflusst die Grösse der elektrischen Stromversorgung die obere Grenzfrequenz der physischen Messkette 10. Je grösser die elektrische Stromversorgung ist, desto höher ist die obere Grenzfrequenz.
- Zudem kann der Fachmann auch das physische Übertragungsmittel 12 mehrteilig realisieren, in dem der physische Sensor 11 über ein erstes physisches Übertragungsmittel 12 mit einem elektrischen Verstärker einer ersten physischen Auswerteeinheit 13 verbunden ist und die erste physische Auswerteeinheit 13 über ein zweites physisches Übertragungsmittel 12 mit einem Datenprozessor und einem Datenspeicher einer zweiten physischen Auswerteeinheit 13 verbunden ist.

Jedes physische Messglied 11, 12, 13 weist einen Identifikator 11*, 12*, 13* auf. Der Identifikator 11*, 12*, 13* speichert einen Identifikationscode 11', 12', 13'. Der Identifikationscode ist eine alphanumerische Zeichenfolge und dient der eindeutigen Identifizierung des physischen Messglieds 11, 12, 13, welches den Identifikator 11*, 12*, 13* aufweist. Der Identifikator 11*, 12*, 13* kann ein zweidimensionaler Code (2D-Code), eine optische Texterkennung (OCR), eine Radio-Frequency Identification (RFID), ein Transducer Electronic Data Sheet (TEDS) gemäss dem Standard Institute of Electrical and Electronics Engineers (IEEE) 1451, usw. sein.

So kann der physische Sensor 11 in der Ausführungsform eines piezoelektrischen Sensors einen Identifikator 11* in der Ausführungsform eines TEDS aufweisen. Ein TEDS umfasst einen Datenspeicher mit einem darin gespeicherten Identifikationscode 11', welche gemäss dem Standard IEEE 1451 elektronisch erfassbar ist.

Das physische Übertragungsmittel 12 in der Ausführungsform eines Signalkabels kann einen Kabelmantel aufweisen, auf welchem ein Identifikator 12* in der Ausführungsform eines 2D-Codes angebracht ist. Der 2D-Code speichert einen optisch erfassbaren Identifikationscode 12'.

Die physische Auswerteeinheit 13 kann ein Auswerteeinheitsgehäuse mit einem darauf angebrachten Identifikator 13* in der Ausführungsform eines RFID aufweisen. Im RFID ist ein über Radiofrequenzen erfassbarer Identifikationscode 13' gespeichert.

Das System 100 weist mindestens ein Identifikationsmittel 110, mindestens eine Datenverarbeitungseinheit 120 und mindestens eine Computereinheit 130 auf. Die Identifikationsmittel 110, die Datenverarbeitungseinheit 120 und die Computereinheit 130 werden nachfolgend auch als Systembestandteile 110, 120, 130 bezeichnet.

Das System 100 weist auch ein Datennetz 20 auf. Das Datennetz 20 übermittelt Daten zwischen den Systembestandteilen 110, 120, 130. Dazu weist jeder Systembestandteil 110, 120, 130 eine elektronische Schnittstelle 210, 220 auf, über welche der Systembestandteil 110, 120, 130 Daten in das Datennetz 20 einspeisen und Daten aus dem Datennetz 20 empfangen kann. Das Datennetz 20 ist ein nichtproprietäres Datennetz wie das Internet. Die Übermittlung der Daten erfolgt nach einem Protokoll wie dem Internet-Protokoll (IP). Jeder Systembestandteil 110, 120, 130 weist eine eineindeutige IP-Adresse auf. Die IP-Adressen sind den Systembestandteilen 110, 120, 130 bekannt. Ein Daten einspeisender Systembestandteil 110, 120, 130 kann somit unter Angabe der IP-Adresse des Daten empfangenden Systembestandteils 110, 120, 130 Daten im Datennetz 20 an einen Daten empfangenden Systembestandteil 110, 120, 130 übermitteln. Das Datennetz 20 weist mehrere Subnetze und mehrere Router 21, 22 auf. Jedes Subnetz weist mindestens einen Router 21, 22 auf. Die Router 21, 22 organisieren die Datenübermittlung zwischen Subnetzen. Jeder Systembestandteil 110, 120, 130 hat über seine elektronische Schnittstelle 210, 220 Zugang zu einem der Router 21, 22 und befindet sich im Subnetz dieses Routers 21, 22. In Fig. 1 haben das Identifikationsmittel 110 und die Computereinheit 130 über eine elektronische Schnittstelle 210 Zugang zu einem Router 21 am Messort 1 und befinden sich im Subnetz des Routers 21. Die Datenverarbeitungseinheit 120 hat über eine elektronische Schnittstelle 220 Zugang zu einem Router 22 am Datenverarbeitungsort 2 und befindet sich im Subnetz des Routers 22. Die elektronische Schnittstelle 210, 220 kann kabelgebunden oder kabellos sein.

Das Identifikationsmittel 110 befindet sich am Messort 1. Das Identifikationsmittel 110 ist ausgebildet, von jedem physischen Messglied 11, 12, 13 den im Identifikator 11*, 12*, 13* gespeicherten Identifikationscode 11', 12', 13' zu erfassen. Das Identifikationsmittel 110 ist genauso vielfältig wie der zu erfassende Identifikationscode 11', 12', 13'. Das Identifikationsmittel 110 kann ein kabelgebundenes Datenlesegerät, eine Kamera, ein funkgebundenes Datenlesegerät, usw. sein.

Zur Erfassung des im Identifikator 11* in der Ausführungsform eines TEDS gespeicherten Identifikationscodes 11' kann das Identifikationsmittel 110 ein kabelgebundenes Datenlesegerät sein, welches über ein Signalkabel mit dem TEDS verbindbar ist und den im TEDS gespeicherten Identifikationscodes 11' ausliest.

Zur Erfassung des Identifikators 12* in der Ausführungsform eines auf dem Kabelmantel angebrachten 2D-Codes kann das Identifikationsmittel 110 eine Kamera sein, welche den 2D-Code scannt und den im 2D-Code gespeicherten Identifikationscode 12' erkennt.

Zur Erfassung des Identifikators 13* in der Ausführungsform eines auf dem Auswerteeinheitsgehäuse angebrachten RFID mit einem darin gespeicherten Identifikationscode 13' kann das Identifikationsmittel 110 ein funkgebundenes Datenlesegerät mit einer Antenne sein, welches über die Antenne ein hochfrequentes elektromagnetisches Wechselfeld erzeugt und den RFID mit elektrischer Energie aktiviert. Der aktivierte RFID moduliert das hochfrequente elektromagnetische Wechselfeld und sendet so den Identifikationscode 13' an die Antenne.

Das Identifikationsmittel 110 kann ein eigenständiges Gerät sein. Das Identifikationsmittel 110 kann aber auch in der physischen Auswerteeinheit 13 oder in der Computereinheit 130 integriert sein.

Vorzugsweise weist jedes physische Messglied 11, 12, 13 als Identifikator 11*, 12*, 13* einen TEDS auf. Das Identifikationsmittel 110 erfasst den im TEDS gespeicherten Identifikationscode 11', 12', 13' automatisch. So kann das Identifikationsmittel 110 in der physischen Auswerteeinheit 13 integriert sein und über das physische Übertragungsmittel 12 in der Ausführungsform eines Signalkabels die in den TEDS des physischen Sensors 11 und des physische Übertragungsmittel 12 gespeicherten Identifikationscodes 11', 12' automatisch erfassen. Da das Identifikationsmittel 110 in der physischen Auswerteeinheit 13 integriert ist, kann es auch den im TEDS der physischen Auswerteeinheit 13 gespeicherten Identifikationscode 13' automatisch erfassen.

Das Identifikationsmittel 110 hat über seine elektronische Schnittstelle 210 Zugang zum Router 21 am Messort 1 und befindet sich im Subnetz des Routers 21 am Messort 1. Das Identifikationsmittel 110 speist die erfassten Identifikationscodes 11', 12', 13' über seine elektronische Schnittstelle 210 und den Router 21 am Messort 1 in das Datennetz 20 ein.

Das Datennetz 20 übermittelt die erfassten Identifikationscodes 11', 12', 13' als Daten an den Router 22 am Datenverarbeitungsort 2. Die Datenverarbeitungseinheit 120 empfängt die Daten über seine elektronische Schnittstelle 220 vom Router 22. Der Datenverarbeitungsort 2 ist messortfern. Der Begriff "messortfern" besagt, dass sich die Datenverarbeitungseinheit 120 nicht im Subnetz des Routers 21 am Messort 1 beim Benutzer befindet. In Fig. 1 ist eine Begrenzung des Datenverarbeitungsorts 2 als gestrichelte gebogene Linie dargestellt. Vorzugsweise übermittelt das Datennetz 20 die erfassten Identifikationscodes 11', 12', 13' automatisch an die Datenverarbeitungseinheit 120.

Die Datenverarbeitungseinheit 120 weist mindestens einen Datenprozessor 121 mit mindestens einer Software 122 und mindestens einen Datenspeicher 123 mit Messglieddaten 124.

Die Messglieddaten 124 sind produktspezifische Daten mindestens eines Produzenten von physischen Messgliedern 11, 12, 13 über die von ihm produzierten physischen Messglieder 11, 12, 13. Im Datenspeicher 123 ist eine sehr grosse Anzahl von Messglieddaten 124 gespeichert. Die Messglieddaten 124 werden andauernd aktualisiert und bilden eine vollständige Datenbank zu produzierten physischen Messgliedern 11, 12, 13. Jedes Datenelement der Messglieddaten 124 weist eine Produktnummer 124' auf. Über die Produktnummer 124* ist das Datenelement zu einem physischen Messglied 11, 12, 13 im Datenspeicher 123 identifizierbar. Die Produktnummer 124* entspricht einem übermittelten Identifikationscode 11', 12', 13'. Für einen übermittelten Identifikationscode 11', 12', 13' lassen sich somit über die Produktnummer 124' Messglieddaten 124 im Datenspeicher 123 identifizieren.

Für ein physisches Messglied 11, 12, 13 umfassen die Messglieddaten 124 mindestens eines der folgenden Datenelemente, vorzugsweise alle der folgenden Datenelemente:
- Datenelemente zum Temperaturbereich des Messglieds 124, in dem das Messglied 124 betrieben werden kann.
- Datenelemente zum Gewicht des Messglieds 124.
- Datenelemente zu äusseren Abmessungen des Messglieds 124.
- Datenelemente zu Werkstoffen, aus denen das Messglied 124 besteht.

Für einen physischen Sensor 11 umfassen die Messglieddaten 124 mindestens eines der folgenden Datenelemente, vorzugsweise alle der folgenden Datenelemente:
- Datenelemente zur physikalischen Messgrösse, welche der physische Sensor 11 misst.
- Datenelemente zu den Messbereichen, in denen der physische Sensor 11 die physikalische Messgrösse misst. Bei einem für das Messsignal zu kleinen Messbereich besteht die Gefahr, dass das Messsignal den Skalenendwert überschreitet und der physische Sensor 11 beschädigt wird. Bei einem für das Messsignal zu grossen Messbereich, wird das Messignal schlecht aufgelöst.
- Datenelemente zum zulässigen Maximalwert der physikalischen Messgrösse, den der physische Sensor 11 misst.
- Datenelemente zu Empfindlichkeiten, mit denen der physische Sensor 11 die physikalische Messgrösse in unterschiedlichen Messbereichen misst.
- Datenelemente zur Wiederholbarkeit, mit welcher der physische Sensor 11 die physikalische Messgrösse misst.
- Datenelemente zu Werten der Linearitätsabweichung einschliesslich der Hysterese mit welcher der physische Sensor 11 die physikalische Messgrösse misst. Die Werte der Linearitätsabweichung einschliesslich Hysterese sind für eine Messung mit aufsteigender physikalischer Messgrösse verschieden von denjenigen einer Messung mit fallender physikalischer Messgrösse. Die Werte der Linearitätsabweichung einschliesslich der Hysterese lassen sich in Funktion vom Skalenendwert graphisch als Hystereseschleife darstellen.
- Datenelemente zu Kalibrierdaten des physischen Sensors 11, wo für unterschiedliche Messbereiche die dort herrschende kleinste Messungenauigkeit dokumentiert ist.
- Datenelemente zum Verbindungstyp zum Signalkabel.

Falls der physische Sensor 11 ein piezoelektrischer Sensor ist, umfassen die Messglieddaten 124 mindestens eines der folgenden Datenelemente, vorzugsweise alle der folgenden Datenelemente:
- Datenelemente zur Eigenfrequenz des physischen Sensors 11. Um den durch Resonanz hervorgerufenen störenden Einfluss der Eigenfrequenz des physischen Sensors 11 auf die Messung der physikalischen Messgrösse auf rund 5% zu halten, liegt die Grenzfrequenz der Messung der physikalischen Messgrösse bei 20% der Eigenfrequenz des physischen Sensors 11.
- Datenelemente zu Temperaturkoeffizienten der Empfindlichkeit des piezoelektrischen Sensors. Üblicherweise sind die Temperaturkoeffizienten der Empfindlichkeit des piezoelektrischen Sensors Faktoren, welche in bestimmten Abschnitten des Temperaturbereichs des piezoelektrischen Sensors gelten. Für eine in einem bestimmten Abschnitt des Temperaturbereichs gemessene physikalische Messgrösse, wird das für die physikalische Messgrösse erzeugte Messsignal mit einem dem bestimmten Abschnitt des Temperaturbereichs entsprechenden Faktor multipliziert. Vorzugsweise jedoch sind die Datenelemente zu Temperaturkoeffizienten der Empfindlichkeit des piezoelektrischen Sensors eine mathematische Reihenentwicklung. Die mathematische Reihenentwicklung bildet den Temperaturkoeffizienten der Empfindlichkeit im Temperaturbereich des piezoelektrischen Sensors um eine Grössenordnung genauer ab, als die üblicherweise angegebenen Faktoren.

- Datenelemente zu Grössen der Vorspannkraft des piezoelektrischen Sensors. Typischerweise variiert die Grösse der Vorspannkraft im Bereich von 20% bis 70% vom Skalenendwert des gewählten Messbereichs.
- Datenelemente zur Empfindlichkeit des piezoelektrischen Sensors in Abhängigkeit von der Grösse von dessen Vorspannkraft. Die Vorspannung bewirkt einen Kraftnebenschluss, ein Teil der zu messenden physikalischen Messgrösse fliesst nicht mehr durch den piezoelektrischen Sensor und die Empfindlichkeit des piezoelektrischen Sensors nimmt ab. Der Zusammenhang zwischen der Abnahme der Empfindlichkeit und der Grösse der Vorspannkraft ist nicht linear.

Für ein physisches Übertragungsmittel 12 in der Ausführungsform eines Signalkabels umfassen die Messglieddaten 124 mindestens eines der folgenden Datenelemente, vorzugsweise alle der folgenden Datenelemente:
- Datenelemente zur Länge des Signalkabels.
- Datenelemente zur Kabelkapazität des Signalkabels.
- Datenelemente zur Kabelinduktivität des Signalkabels.
- Datenelemente zum Verbindungstyp zum physischen Sensor 11.
- Datenelemente zum Verbindungstyp zur physischen Auswerteeinheit 13.

Für ein physisches Übertragungsmittel 12 in der Ausführungsform einer Funkverbindung umfassen die Messglieddaten 124 mindestens eines der folgenden Datenelemente, vorzugsweise alle der folgenden Datenelemente:
- Datenelemente zur Anzahl der Übertragungskanäle.
- Datenelemente zur Bandbreite der einzelnen Übertragungskanäle.

Für eine physische Auswerteeinheit 13 umfassen die Messglieddaten 124 mindestens eines der folgenden Datenelemente, vorzugsweise alle der folgenden Datenelemente:
- Datenelemente zur Anzahl der Kanäle, mit denen die physische Auswerteeinheit 13 Messsignale empfängt.
- Datenelemente zu den Messbereichen, in denen die physische Auswerteeinheit 13 Messsignale darstellt.
- Datenelemente zur Grösse des Übersprechens zwischen Kanälen der physischen Auswerteeinheit 13.
- Datenelemente zum eingangsbezogenen Rauschen der physischen Auswerteeinheit 13.
- Datenelemente zur Auflösung, mit der die physische Auswerteeinheit 13 die kleinstmögliche Änderung der physikalischen Messgrösse darstellt.
- Datenelemente zu Kalibrierdaten der physischen Auswerteeinheit, wo für verschiedene physikalische Messgrössen die kleinste Messungenauigkeit bei der Auswertung des Messsignals dokumentiert ist.
- Datenelemente zum Verbindungstyp zum Signalkabel.

Falls der physische Sensor 11 ein piezoelektrischer Sensor ist und falls die physische Auswerteeinheit 13 einen Ladungsverstärker im piezoelektrischen Sensor aufweist, umfassen die Messglieddaten 124 Datenelemente zu den Zeitkonstanten des Ladungsverstärkers.

Falls der physische Sensor 11 ein piezoelektrischer Sensor ist, falls die physische Auswerteeinheit 13 einen Ladungsverstärker im piezoelektrischen Sensor aufweist und falls das physische Übertragungsmittel 12 ein Signalkabel ist, umfassen die Messglieddaten 124 Datenelemente zu Grössen der elektrischen Stromversorgung des Ladungsverstärkers über das Signalkabel.

Die Software 122 ist im Datenprozessor 121 geladen. Die im Datenprozessor 121 geladene Software 122 ist ausgebildet, für übermittelte Identifikationscodes 11', 12', 13' Messglieddaten 124 aus dem Datenspeicher 123 auszulesen und mit den ausgelesenen Messglieddaten 124 eine digitale Messkette 310 zu erzeugen. Die digitale Messkette 310 weist mehrere digitale Messglieder 311, 312, 313 auf, welche digitalen Messglieder 311, 312, 313 mindestens einen digitalen Sensor 311, mindestens ein digitales Übertragungsmittel 312 und mindestens eine digitale Auswertereinheit 313 umfassen. Vorzugsweise liest die Software 122 für übermittelte Identifikationscodes 11', 12', 13' Messglieddaten 124 automatisch aus dem Datenspeicher 123 aus und erzeugt mit den ausgelesenen Messglieddaten 124 automatisch die digitale Messkette 310.

Die Datenverarbeitungseinheit 120 speist die digitale Messkette 310 über seine elektronische Schnittstelle 220 und den Router 22 am Datenverarbeitungsort 22 in das Datennetz 20 ein.

Das Datennetz 20 übermittelt die digitale Messkette 310 als Daten an den Router 21 am Messort 1. Die Computereinheit 130 empfängt die Daten über seine elektronische Schnittstelle 210 vom Router 21. Vorzugsweise übermittelt das Datennetz 20 die digitale Messkette 310 automatisch an die Computereinheit 130.

Die Computereinheit 130 weist mindestens einen Computerdatenprozessor 131 mit mindestens einer Computersoftware 132, mindestens einen Computerdatenspeicher 134, mindestens ein Computereingabemittel 135 und mindestens ein Computerausgabemittel 136 auf. Das Computereingabemittel 135 ist eine elektronische Schnittstelle, eine Tastatur, ein berührungsempfindlicher Bildschirm, usw. Das Computerausgabemittel 136 ist ein Bildschirm, usw.

Die übermittelte digitale Messkette 310 und ihre digitalen Messglieder 311, 312, 313 sind eine digitale Darstellung der physischen Messkette 10 mit den physischen Messgliedern 11, 12, 13 beim Benutzer. Die übermittelte digitale Messkette 210 ist im Computerdatenspeicher 133 speicherbar und auf dem Computerausgabemittel 136 für den Benutzer visuell ausgebbar.

Über das Computereingabemittel 13 ist mindestens ein Arbeitspunkt 137 eingebbar. Der Arbeitspunkt 137 ist eine zu messende physikalische Messgrösse wie eine Nennkraft, eine Nennbeschleunigung, eine Nenntemperatur, usw. sein. Der Arbeitspunkt 137 umfasst mindestens eines der folgenden Datenelemente:
- Ein Grössenbereich des Arbeitspunkts 137 zwischen einem kleinsten Arbeitspunkt 137 und einem grössten Arbeitspunkt 137.
- Ein Frequenzbereich des Arbeitspunkts 137 zwischen einem langsamsten Arbeitspunkt 137 und einem schnellsten Arbeitspunkt 137.
- Ein Temperaturbereich des Arbeitspunkts 137 zwischen einem kältesten Arbeitspunkt 137 und einem heissesten Arbeitspunkt 137.

Die Computersoftware 132 ist im Computerdatenprozessor 131 geladen. Die im Computerdatenprozessor 131 geladene Computersoftware 132 ist ausgebildet, den eingegebenen Arbeitspunkt 137 einzulesen und der übermittelten digitalen Messkette 310 für den eingegebenen Arbeitspunkt 137 mindestens einen Konfigurationsparameter 139 automatisch zu entnehmen.

Mit dem Konfigurationsparameter 139 erfolgt die technische Anpassung der physischen Messglieder 11, 12, 13 zueinander, damit die physischen Messglieder 11, 12, 13 den Arbeitspunkt 137 genau messen können.

Für einen physischen Sensor 11 umfasst der Konfigurationsparameter 139 mindestens eines der folgenden Datenelemente, vorzugsweise alle der folgenden Datenelemente:
- Datenelemente zu einem besten Messbereich 1392 des physischen Sensors 11, bei welchem für den eingegebenen Grössenbereich des Arbeitspunkts 137 der grösste Arbeitspunkt 137 den Skalenendwert des besten Messbereichs 1392 nicht überschreitet und bei welchem der physische Sensor 11 auch noch den kleinsten Arbeitspunkt 137 mit möglichst hoher Auflösung misst.
- Datenelemente zu einem besten Wert der Linearitätsabweichung einschliesslich Hysterese 1393 des physischen Sensors 11, welcher für eine möglichst hohe Auflösung im Grössenbereich des Arbeitspunkts 137 liegt.
- Datenelemente zu einer besten kleinsten Messungenauigkeit 1394 des physischen Sensors 11 für den besten Messbereich 1392.

Für einen physischen Sensor 11 in der Ausführungsform eines piezoelektrischen Sensors umfasst der Konfigurationsparameter 139 mindestens eines der folgenden Datenelemente, vorzugsweise alle der folgenden Datenelemente:
- Datenelemente zu einem besten Temperaturkoeffizienten der Empfindlichkeit 1395 des piezoelektrischen Sensors. Der beste Temperaturkoeffizient der Empfindlichkeit 1395 wird aus der mathematischen Reihenentwicklung gebildet und gilt im Temperaturbereich des Arbeitspunkts 137.
- Datenelemente zu einer besten Grösse der Vorspannkraft 1396 des piezoelektrischen Sensors. Für eine möglichst hohe Auflösung im eingegebenen Grössenbereich des Arbeitspunkts 137 ist die beste Grösse der Vorspannkraft 1396 in Summe mit dem grössten Arbeitspunkt 137 weitgehend gleich dem Skalenendwert des besten Messbereichs 1392.

Für eine physische Auswerteeinheit 13 umfasst der Konfigurationsparameter 139 mindestens eines der folgenden Datenelemente, vorzugsweise alle der folgenden Datenelemente:
- Datenelemente zu einer besten Empfindlichkeit 1398 im besten Messbereich 1392 des physischen Sensors 11.
- Datenelemente zu einer besten Empfindlichkeit 1399 im besten Messbereich 1392 für die beste Grösse der Vorspannkraft des physischen Sensors 11.
- Datenelemente zu einer besten kleinsten Messungenauigkeit 1400 der physischen Auswerteeinheit 13 für den Arbeitspunkt 137.
- Für einen physischen Sensor 11 in der Ausführungsform eines piezoelektrischen Sensors umfasst der Konfigurationsparameter 139 Datenelemente zu einer besten Zeitkonstante 1391 des Ladungsverstärkers, welche für den Frequenzbereich des Arbeitspunkts 137 eine kleinste Ladungsdrift bildet.
- Für einen physischen Sensor 11 in der Ausführungsform eines piezoelektrischen Sensors umfasst der Konfigurationsparameter 139 Datenelemente zu einer besten Zeitkonstante 1401 des Ladungsverstärkers, welche im Frequenzbereich des Arbeitspunkts 137 keine untere Grenzfrequenz bildet. Diese beste Zeitkonstante 1401 vermeidet im Frequenzbereich des Arbeitspunkts 137 eine untere Grenzfrequenz.
- Für einen physischen Sensor 11 in der Ausführungsform eines piezoelektrischen Sensors und für eine physische Auswerteeinheit 13, die einen Ladungsverstärker im piezoelektrischen Sensor aufweist und für ein physisches Übertragungsmittel 12 in der Ausführungsform eines Signalkabels, umfasst der Konfigurationsparameter 139 Datenelemente zu einer besten elektrischen Stromversorgung 1402 des Ladungsverstärkers, welche für die Kabelkapazität des Signalkabels im Frequenzbereich des Arbeitspunkts 137 keine obere Grenzfrequenz bildet.

Eine Computersoftware 132 ist ausgebildet, die physische Messkette 10 mit dem Konfigurationsparameter 139 automatisch zu konfigurieren. Dazu ist die Computereinheit 130 über eine Datenübertragung 138 wie Ethernet, Universal Serial Bus (USB), usw. mit der physischen Auswerteeinheit 13 verbunden. Über die Datenübertragung 138 sendet die Computersoftware 132 den Konfigurationsparameter 139 automatisch an die physische Auswerteeinheit 13. Die physische Auswerteeinheit 13 verwendet die gesendeten Konfigurationsparameter 139 für die Messung des Arbeitspunkts 137 mit der physischen Messkette 10.

### Bezugszeichenliste

- 1: Messort
- 2: Datenverarbeitungsort
- 10: physische Messkette
- 11: physischer Sensor
- 12: physisches Übertragungsmittel
- 13: physische Auswerteeinheit
- 11*, 12*, 13*: Identifikator
- 11', 12', 13': Identifikationscode
- 20: Datennetz
- 21, 22: Router
- 210, 220: elektronische Schnittstelle
- 100: System
- 110: Identifikationsmittel
- 120: Datenverarbeitungseinheit
- 121: Datenprozessor
- 122: Software
- 123: Datenspeicher
- 124: Messglieddaten
- 124': Produktnummer
- 130: Computereinheit
- 131: Computerdatenprozessor
- 132: Computersoftware
- 133: Computerdatenspeicher
- 135: Computereingabemittel
- 136: Computerausgabemittel
- 137: Arbeitspunkt
- 138: Datenübertragung
- 139: Konfigurationsparameter
- 1391: beste Zeitkonstante für eine kleinste Ladungsdrift
- 1392: bester Messbereich
- 1393: bester Wert der Linearitätsabweichung einschliesslich Hysterese
- 1394: bester Wert der kleinsten Messungenauigkeit des physischen Sensors
- 1395: bester Temperaturkoeffizient der Empfindlichkeit
- 1396: beste Grösse der Vorspannkraft
- 1397: beste Anzahl der Kanäle
- 1398: beste Empfindlichkeit im besten Messbereich
- 1399: beste Empfindlichkeit im besten Messbereich für die beste Grösse der Vorspannkraft
- 1400: bester Wert der kleinsten Messungenauigkeit der physischen Auswerteeinheit
- 1401: beste Zeitkonstante zur Vermeidung einer unteren Grenzfrequenz
- 1402: beste elektrische Stromversorgung
- 310: digitale Messkette
- 311: digitaler Sensor
- 312: digitales Übertragungsmittel
- 313: digitale Auswerteeinheit

## Patentansprüche

1. System (100) zum Betreiben einer physischen Messkette (10), welche physische Messkette (10) ausgebildet ist, an einem Messort (1) eine physikalische Messgrösse zu messen; welche physische Messkette (10) mehrere physische Messglieder (11, 12, 13) aufweist, welche physischen Messglieder (11, 12, 13) in einer Ursache-Wirkung-Beziehung zueinander stehen; welche physischen Messglieder (11, 12, 13) mindestens einen physischen Sensor (11), mindestens ein physisches Übertragungsmittel (12) und mindestens eine physische Auswertereinheit (13) umfassen; wobei jedes physische Messglied (11, 12, 13) einen Identifikator (11*, 12*, 13*) mit darin gespeicherten Identifikationscodes (11', 12', 13') aufweist;
wobei das System (100) mindestens ein Identifikationsmittel (110) aufweist, welches Identifikationsmittel (110) am Messort (1) angeordnet ist und ausgebildet ist, von jedem physischen Messglied (11, 12, 13) den im Identifikator (11*, 12*, 13*) gespeicherten Identifikationscode (11', 12', 13') zu erfassen;
wobei das System (100) mindestens eine Datenverarbeitungseinheit (120) aufweist, welche Datenverarbeitungseinheit (12) an einem messortfernen Datenverarbeitungsort (2) angeordnet ist;
wobei das System (100) ein Datennetz (20) aufweist und das Datennetz (20) den erfassten Identifikationscode (11', 12', 13') an die Datenverarbeitungseinheit (120) übermittelt;
wobei die Datenverarbeitungseinheit (120) mindestens einen Datenprozessor (121) mit mindestens einer Software (122) und mindestens einen Datenspeicher (123) mit Messglieddaten (124) aufweist;
**dadurch gekennzeichnet, dass**
die Software (122) ausgebildet ist, für übermittelte Identifikationscodes (11', 12', 13') Messglieddaten (124) aus dem Datenspeicher (123) auszulesen und mit den ausgelesenen Messglieddaten (124) eine digitale Messkette (310) zu erzeugen;
dass die Messglieddaten (124) produktspezifische Daten mindestens eines Produzenten von physischen Messgliedern (11, 12, 13) über die von ihm produzierten physischen Messglieder (11, 12, 13) sind;
dass die digitale Messkette (310) mehrere digitale Messglieder (311, 312, 313) aufweist, welche digitalen Messglieder (311, 312, 313) mindestens einen digitalen Sensor (311), mindestens ein digitales Übertragungsmittel (312) und mindestens eine digitale Auswertereinheit (313) umfassen; und
dass das System (100) mindestens eine Computereinheit (130) aufweist, welche am Messort (1) angeordnet ist und das Datennetz (20) die digitale Messkette (310) an die Computereinheit (130) übermittelt.

2. System (100) nach Anspruch 1, **dadurch gekennzeichnet, dass** jedes physische Messglied (11, 12, 13) als Identifikator (11*, 12*, 13*) ein TEDS, d.h. Transducer Electronic Data Sheet, ist; dass das Identifikationsmittel (110) von jedem physischen Messglied (11, 12, 13) den im TEDS gespeicherten Identifikationscode (11', 12', 13') automatisch erfasst; dass das Datennetz (20) die erfassten Identifikationscodes (11', 12', 13') automatisch an die Datenverarbeitungseinheit (120) übermittelt; dass die Software (122) ausgebildet ist, für übermittelte TEDS Messglieddaten (124) automatisch aus dem Datenspeicher (123) auszulesen und mit den ausgelesenen Messglieddaten (124) automatisch eine digitale Messkette (310) zu erzeugen; und dass das Datennetz (20) die digitale Messkette (310) automatisch an die Computereinheit (130) übermittelt.

3. System (100) nach einem der Ansprüche 1 oder 2, **dadurch gekennzeichnet, dass** die Computereinheit (130) mindestens einen Computerdatenprozessor (131) mit mindestens einer Computersoftware (132) und mindestens ein Computereingabemittel (135) aufweist; dass über das Computereingabemittel (13) mindestens ein Arbeitspunkt (137) eingebbar ist; dass die Computersoftware (132) ausgebildet ist, der übermittelten digitalen Messkette (310) für den eingegebenen Arbeitspunkt (137) mindestens einen Konfigurationsparameter (139) automatisch zu entnehmen.

4. System (100) nach Anspruch 3, **dadurch gekennzeichnet, dass** der Arbeitspunkt (137) mindestens eines der folgenden Datenelemente umfasst:
- Ein Grössenbereich des Arbeitspunkts (137) zwischen einem kleinsten Arbeitspunkt (137) und einem grössten Arbeitspunkt (137);
- Ein Frequenzbereich des Arbeitspunkts (137) zwischen einem langsamsten Arbeitspunkt (137) und einem schnellsten Arbeitspunkt (137);
- Ein Temperaturbereich des Arbeitspunkts (137) zwischen einem kältesten Arbeitspunkt (137) und einem heissesten Arbeitspunkt (137).

5. System (100) nach Anspruch 4, **dadurch gekennzeichnet, dass** die übermittelte digitale Messkette (310) Messglieddaten (124) zu Messbereichen des physischen Sensors (11) umfassen; dass die Computersoftware (132) ausgebildet ist, für den eingegebenen Grössenbereich des Arbeitspunkts (137) den Messbereichen des physischen Sensors (11) als Konfigurationsparameter (139) einen besten Messbereich (1392) des physischen Sensors (11) zu entnehmen, bei welchem besten Messbereich (1392) ein grösster Arbeitspunkt (137) den Skalenendwert des besten Messbereichs (1392) nicht überschreitet und bei welchem besten Messbereich (1392) der physische Sensor (11) auch noch den kleinsten Arbeitspunkt (137) mit möglichst hoher Auflösung misst.

6. System (100) nach Anspruch 5, **dadurch gekennzeichnet, dass** die übermittelte digitale Messkette (310) Messglieddaten (124) zu Empfindlichkeiten umfassen, mit denen der physische Sensor (11) die physikalische Messgrösse in unterschiedlichen Messbereichen misst; und dass die Computersoftware (132) ausgebildet ist, den Empfindlichkeiten des physischen Sensors (11) als Konfigurationsparameter (139) eine beste Empfindlichkeit (1398) im besten Messbereich (1392) des physischen Sensors (11) zu entnehmen.

7. System (100) nach Anspruch 5, **dadurch gekennzeichnet, dass** der physische Sensor (11) ein piezoelektrischer Sensor ist; dass die übermittelte digitale Messkette (310) Messglieddaten (124) zu Grössen der Vorspannkraft des piezoelektrischen Sensors umfassen; und dass die Computersoftware (132) ausgebildet ist, für den eingegebenen Grössenbereich des Arbeitspunkts (137) den Messglieddaten (124) zu Grössen der Vorspannkraft des piezoelektrischen Sensors eine beste Grösse der Vorspannkraft (1396) des piezoelektrischen Sensors zu entnehmen, welche beste Grösse der Vorspannkraft (1396) in Summe mit dem grössten Arbeitspunkt (137) weitgehend gleich dem Skalenendwert des besten Messbereichs (1392) ist.

8. System (100) nach Anspruch 7, **dadurch gekennzeichnet, dass** die übermittelte digitale Messkette (310) Messglieddaten (124) zu Empfindlichkeiten umfassen, mit denen der physische Sensor (11) die physikalische Messgrösse bei unterschiedlichen Grössen der Vorspannkraft misst; und dass die Computersoftware (132) ausgebildet ist, den Empfindlichkeiten des physischen Sensors (11) als Konfigurationsparameter (139) eine beste Empfindlichkeit (1399) bei der besten Grösse der Vorspannkraft (1396) des physischen Sensors (11) zu entnehmen.

9. System (100) nach Anspruch 5, **dadurch gekennzeichnet, dass** die übermittelte digitale Messkette (310) Messglieddaten (124) zu in unterschiedlichen Messbereichen des physischen Sensors (11) herrschende kleinste Messungenauigkeiten und zu für verschiedene physikalische Messgrössen herrschende kleinste Messungenauigkeiten der physischen Auswerteeinheit (13) umfassen; und dass die Computersoftware (132) ausgebildet ist, den in unterschiedlichen Messbereichen herrschenden kleinsten Messungenauigkeiten des physischen Sensors (11) und den für verschiedenen physikalische Messgrössen herrschenden kleinsten Messungenauigkeiten der physischen Auswerteeinheit (13) als Konfigurationsparameter (139) für den besten Messbereich (1392) eine beste kleinste Messungenauigkeit (1394) des physischen Sensors (11) und für den Arbeitspunkt (137) eine beste kleinste Messungenauigkeit (1400) der physischen Auswerteeinheit (13) zu entnehmen.

10. System (100) nach Anspruch 4, **dadurch gekennzeichnet, dass** der physische Sensor (11) ein piezoelektrischer Sensor ist; dass die übermittelte digitale Messkette (310) Messglieddaten (124) zu Temperaturkoeffizienten der Empfindlichkeit des piezoelektrischen Sensors umfassen; dass die Temperaturkoeffizienten der Empfindlichkeit eine mathematische Reihenentwicklung sind; und dass die Computersoftware (132) ausgebildet ist, für den eingegebenen Temperaturbereich des Arbeitspunkts (137) der mathematischen Reihenentwicklung als Konfigurationsparameter (139) einen besten Temperaturkoeffizienten der Empfindlichkeit (1395) des piezoelektrischen Sensors zu entnehmen, welcher beste Temperaturkoeffizient der Empfindlichkeit (1395) im Temperaturbereich des Arbeitspunkts (137) gilt.

11. System (100) nach Anspruch 4, **dadurch gekennzeichnet, dass** die übermittelte digitale Messkette (310) Messglieddaten (124) zu Werten der Linearitätsabweichung einschliesslich Hysterese des physischen Sensors (11) umfassen; und dass die Computersoftware (132) ausgebildet ist, für den eingegebenen Grössenbereich des Arbeitspunkts (137) den Werten der Linearitätsabweichung einschliesslich Hysterese des physischen Sensors (11) einen besten Wert der Linearitätsabweichung einschliesslich Hysterese (1393) des physischen Sensors (11) zu entnehmen, welcher beste Wert der Linearitätsabweichung einschliesslich Hysterese (1393) für eine möglichst hohe Auflösung im Grössenbereich des Arbeitspunkts (137) liegt.

12. System (100) nach Anspruch 4, **dadurch gekennzeichnet, dass** der physische Sensor (11) ein piezoelektrischer Sensor ist; dass die physische Auswerteeinheit (13) einen Ladungsverstärker im piezoelektrischen Sensor aufweist; dass die übermittelte digitale Messkette (310) Messglieddaten (124) zu Zeitkonstanten des Ladungsverstärkers umfassen; und dass die Computersoftware (132) ausgebildet ist, für den eingegebenen Frequenzbereich des Arbeitspunkts (137) den Zeitkonstanten des Ladungsverstärkers als Konfigurationsparameter (139) eine beste Zeitkonstante (1391) des Ladungsverstärkers zu entnehmen, welche für den Frequenzbereich des Arbeitspunkts (137) eine kleinste Ladungsdrift bildet.

13. System (100) nach Anspruch 4, **dadurch gekennzeichnet, dass** der physische Sensor (11) ein piezoelektrischer Sensor ist; dass die physische Auswerteeinheit (13) einen Ladungsverstärker im piezoelektrischen Sensor aufweist; dass die übermittelte digitale Messkette (310) Messglieddaten (124) zu Zeitkonstanten des Ladungsverstärkers umfassen; und dass die Computersoftware (132) ausgebildet ist, für den eingegebenen Frequenzbereich des Arbeitspunkts (137) den Zeitkonstanten des Ladungsverstärkers als Konfigurationsparameter (139)eine beste Zeitkonstante (1401) des Ladungsverstärkers zu entnehmen, welche im Frequenzbereich des Arbeitspunkts (137) keine untere Grenzfrequenz bildet.

14. System (100) nach Anspruch 4, **dadurch gekennzeichnet, dass** der physische Sensor (11) ein piezoelektrischer Sensor ist; dass die physische Auswerteeinheit (13) einen Ladungsverstärker im piezoelektrischen Sensor aufweist; dass das physische Übertragungsmittel (12) ein Signalkabel ist; dass die übermittelte digitale Messkette (310) Messglieddaten (124) zu Grössen der elektrischen Stromversorgung des Ladungsverstärkers über das Signalkabel umfassen; und dass die Computersoftware (132) ausgebildet ist, für den eingegebenen Frequenzbereich des Arbeitspunkts (137) den Grössen der elektrischen Stromversorgung des Ladungsverstärkers über das Signalkabel als Konfigurationsparameter (139) eine beste Grösse der elektrischen Stromversorgung (1402) des Ladungsverstärkers über das Signalkabel zu entnehmen, welche für die Kabelkapazität des Signalkabels im Frequenzbereich des Arbeitspunkts (137) keine obere Grenzfrequenz bildet.

15. System (100) nach einem der Ansprüche 3 bis 14, **dadurch gekennzeichnet, dass** die Computersoftware (132) ausgebildet ist, die physische Messkette (10) mit dem Konfigurationsparameter (139) automatisch zu konfigurieren.

## Claims

1. A system (100) for operating a physical measuring chain (10), which physical measuring chain (10) is designed to measure a physical measurand at a measuring location (1); which physical measuring chain (10) comprises a plurality of physical measuring components (11, 12, 13), which physical measuring components (11, 12, 13) are in a cause- and-effect relationship to each other; which physical measuring components (11, 12, 13) comprise at least one physical sensor (11), at least one physical transmission means (12) and at least one physical evaluation unit (13); wherein each physical measuring component (11, 12, 13) comprises an identifier (11*, 12*, 13*) with identification codes (11', 12', 13') stored therein;
wherein said system (100) comprises at least one identification means (110), which identification means (110) is arranged at the measuring location (1) and is designed to detect the identification code (11', 12', 13') stored in the identifier (11*, 12*, 13*) from each physical measuring component (11, 12, 13);
wherein the system (100) comprises at least one data processing unit (120), which data processing unit (12) is arranged at a data processing location (2) remote from the measuring location;
wherein the system (100) comprises a data network (20), which data network (20) transmits the detected identification code (11', 12', 13') to the data processing unit (120);
wherein the data processing unit (120) comprises at least one data processor (121) comprising at least one software (122) and at least one data memory (123) with measuring component data (124);
**characterized in that** the software (122) is designed to read out measuring component data (124) from the data memory (123) for transmitted identification codes (11', 12', 13') and to generate a digital measuring chain (310) with the read-out measuring component data (124);
**in that** the measuring component data (124) are product-specific data of at least one manufacturer of physical measuring components (11, 12, 13) that are specific for physical measuring components (11, 12, 13) produced by it; **in that** the digital measuring chain (310) comprises a plurality of digital measuring components (311, 312, 313), which digital measuring components (311, 312, 313) comprise at least one digital sensor (311), at least one digital transmission means (312) and at least one digital evaluation unit (313); and
**in that** the system (100) comprises at least one computer unit (130) which is arranged at the measuring location (1) and the data network (20) transmits the digital measuring chain (310) to the computer unit (130).

2. The system (100) according to claim 1, **characterized in that** each physical measuring component (11, 12, 13) is a TEDS (i.e. Transducer Electronic Data Sheet) as an identifier (11*, 12*, 13*); that the identification means (110) of each physical measuring component (11, 12, 13) automatically detects the identification code (11', 12', 13') stored in the TEDS; that the data network (20) automatically transmits the detected identification codes (11', 12', 13') to the data processing unit (120); that the software (122) is designed to automatically read out measuring component data (124) from the data memory (123) for transmitted TEDS and to automatically generate a digital measuring chain (310) with the read-out measuring component data (124); and **in that** the data network (20) automatically transmits the digital measuring chain (310) to the computer unit (130).

3. The system (100) according to any of the claims 1 or 2, **characterized in that** the computer unit (130) comprises at least one computer data processor (131) comprising at least one computer software (132) and at least one computer input means (135); that at least one operating point (137) can be entered via the computer input means (13); that the computer software (132) is designed to automatically extract at least one configuration parameter (139) from the transmitted digital measuring chain (310) for the operating point (137) entered.

4. The system (100) according to claim 3, **characterized in that** the operating point (137) comprises at least one of the following data elements:
- A range of magnitudes of the operating point (137) between a smallest operating point (137) and a largest operating point (137);
- A frequency range of the operating point (137) between a slowest operating point (137) and a fastest operating point (137);
- A temperature range of the operating point (137) between a coldest operating point (137) and a warmest operating point (137).

5. The system (100) according to claim 4, **characterized in that** the transmitted digital measuring chain (310) comprises measuring component data (124) concerning measuring ranges of the physical sensor (11); that the computer software (132) is designed to extract a best measuring range (1392) of the physical sensor (11) from the measuring ranges of the physical sensor (11) as the configuration parameter (139) for the entered range of magnitudes of the operating point (137), in which best measuring range (1392) a largest operating point (137) does not exceed the full scale value of the best measuring range (1392) and, furthermore, in which best measuring range (1392) the physical sensor (11) still measures the smallest operating point (137) with the highest possible resolution.

6. The system (100) according to claim 5, **characterized in that** the transmitted digital measuring chain (310) comprises measuring component data (124) concerning sensitivities by which the physical sensor (11) measures the physical measurand in different measurement ranges; and **in that** the computer software (132) is adapted to extract a best sensitivity (1398) in the best measurement range (1392) of the physical sensor (11) from the sensitivities of the physical sensor (11) as a configuration parameter (139).

7. The system (100) according to claim 5, **characterized in that** the physical sensor (11) is a piezoelectric sensor; that the transmitted digital measuring chain (310) comprises measuring component data (124) concerning magnitudes of the preload force of the piezoelectric sensor; and **in that** the computer software (132) is designed to extract a best magnitude of the preload force (1396) of the piezoelectric sensor from the measuring component data (124) that concern magnitudes of the preload force of the piezoelectric sensor for the entered range of magnitudes of the operating point (137), which best magnitude of the preload force (1396) added to the largest operating point (137) is substantially equal to the full scale value of the best measuring range (1392).

8. The system (100) according to claim 7, **characterized in that** the transmitted digital measuring chain (310) comprises measuring component data (124) concerning sensitivities by which the physical sensor (11) measures the physical measured value at different magnitudes of the preload force; and **in that** the computer software (132) is adapted to extract a best sensitivity (1399) at the best magnitude of the preload force (1396) of the physical sensor (11) from the sensitivities of the physical sensor (11) as a configuration parameter (139).

9. The system (100) according to claim 5, **characterized in that** the transmitted digital measuring chain (310) comprises measuring component data (124) concerning the smallest measurement inaccuracies prevailing in different measurement ranges of the physical sensor (11) and concerning the smallest measurement inaccuracies of the physical evaluation unit (13) prevailing for different physical measurands; and **in that** the computer software (132) is designed to extract from the smallest measurement inaccuracies of the physical sensor (11) prevailing in different measurement ranges and from the smallest measurement inaccuracies of the physical evaluation unit (13) prevailing for different physical measurands a best smallest measurement inaccuracy (1394) of the physical sensor (11) and for the operating point (137) a best smallest measurement inaccuracy (1400) of the physical evaluation unit (13) as configuration parameters (139) for the best measurement range (1392).

10. The system (100) according to claim 4, **characterized in that** the physical sensor (11) is a piezoelectric sensor; that the transmitted digital measuring chain (310) comprises measuring component data (124) concerning temperature coefficients of the sensitivity of the piezoelectric sensor; that the temperature coefficients of the sensitivity are a mathematical series expansion; and **in that** the computer software (132) is adapted to extract a best temperature coefficient of the sensitivity (1395) of the piezoelectric sensor for the entered temperature range of the operating point (137) of the mathematical series expansion as a configuration parameter (139), which best temperature coefficient of the sensitivity (1395) is effective in the temperature range of the operating point (137).

11. The system (100) according to claim 4, **characterized in that** the transmitted digital measuring chain (310) comprises measuring component data (124) concerning values of the linearity deviation including hysteresis of the physical sensor (11); and **in that** the computer software (132) is designed to extract a best value of the linearity deviation including hysteresis (1393) of the physical sensor (11) for the entered range of magnitudes of the operating point (137) from the values of the linearity deviation including hysteresis of the physical sensor (11), which best value of the linearity deviation including hysteresis (1393) is in the range of magnitudes of the operating point (137) for the highest possible resolution.

12. The system (100) according to claim 4, **characterized in that** the physical sensor (11) is a piezoelectric sensor; that the physical evaluation unit (13) comprises a charge amplifier in the piezoelectric sensor; that the transmitted digital measuring chain (310) comprises measuring component data (124) concerning time constants of the charge amplifier; and **in that** the computer software (132) is designed to extract as a configuration parameter (139) for the entered frequency range of the operating point (137) from the time constants of the charge amplifier a best time constant (1391) of the charge amplifier which results in a smallest charge drift for the frequency range of the operating point (137).

13. The system (100) according to claim 4, **characterized in that** the physical sensor (11) is a piezoelectric sensor; that the physical evaluation unit (13) comprises a charge amplifier in the piezoelectric sensor; that the transmitted digital measuring chain (310) comprises measuring component data (124) concerning time constants of the charge amplifier; and **in that** the computer software (132) is designed to extract as a configuration parameter (139) for the entered frequency range of the operating point (137) from the time constants of the charge amplifier a best time constant (1401) of the charge amplifier which does not result in a lower frequency limit in the frequency range of the operating point (137).

14. The system (100) according to claim 4, **characterized in that** the physical sensor (11) is a piezoelectric sensor; that the physical evaluation unit (13) comprises a charge amplifier in the piezoelectric sensor; that the physical transmission means (12) is a signal cable; that the transmitted digital measuring chain (310) comprises measuring component data (124) concerning magnitudes of the electrical power supply of the charge amplifier via the signal cable; and **in that** the computer software (132) is designed to extract as a configuration parameter (139) for the entered frequency range of the operating point (137) from the magnitudes of the electrical power supply of the charge amplifier via the signal cable a best magnitude of the electrical power supply (1402) of the charge amplifier via the signal cable which does not result in an upper frequency limit for the cable capacitance of the signal cable in the frequency range of the operating point (137).

15. The system (100) according to any of claims 3 to 14, **characterized in that** the computer software (132) is adapted to automatically configure the physical measuring chain (10) by the configuration parameter (139).

## Revendications

1. Système (100) pour la mise en œuvre d'une chaîne de mesure physique (10), laquelle chaîne de mesure physique (10) est conçue pour mesurer une valeur de mesure physique à un site de mesure (1) ; laquelle chaîne de mesure physique (10) comprend une pluralité d'éléments de mesure physiques (11, 12, 13), lesquels éléments de mesure physiques (11, 12, 13) sont en relation de cause à effet les uns avec les autres ; lesquels éléments de mesure physiques (11, 12, 13) comprennent au moins un capteur physique (11), au moins un moyen de transmission physique (12) et au moins une unité d'évaluation physique (13) ; dans lequel chaque élément de mesure physique (11, 12, 13) présente un identificateur (11*, 12*, 13*) avec des codes d'identification (11', 12', 13') stockés dans cet identificateur ;
dans lequel ledit système (100) comprend au moins un moyen d'identification (110), lequel moyen d'identification (110) est disposé au site de mesure (1) et est conçu pour détecter le code d'identification (11', 12', 13') stocké dans l'identificateur (11*, 12*, 13*) de chaque élément de mesure physique (11, 12, 13) ;
dans lequel le système (100) comprend au moins une unité de traitement des données (120), laquelle unité de traitement des données (12) est disposée à un site de traitement des données (2) éloigné du site de mesure ;
dans lequel le système (100) comprend un réseau de données (20) et lequel réseau de données (20) transmet le code d'identification (11', 12', 13') détecté à l'unité de traitement des données (120) ;
dans lequel l'unité de traitement des données (120) comprend au moins un processeur de données (121) comprenant au moins un logiciel (122) et au moins une mémoire de données (123) comportant des données d'élément de mesure (124) ;
**caractérisé en ce que**
ledit logiciel (122) est conçu pour lire, pour les codes d'identification (11', 12', 13') transmis, les données d'élément de mesure (124) de la mémoire de données (123) et pour générer une chaîne de mesure numérique (310) en utilisant les données d'élément de mesure (124) lues ;
**en ce que** les données d'élément de mesure (124) sont des données spécifiques au produit d'au moins un producteur d'éléments de mesure physiques (11, 12, 13) relatives aux éléments de mesure physiques (11, 12, 13) qu'il produit ;
**en ce que** ladite chaîne de mesure numérique (310) comprend une pluralité d'éléments de mesure numériques (311, 312, 313), lesquels éléments de mesure numériques (311, 312, 313) comprennent au moins un capteur numérique (311), au moins un moyen de transmission numérique (312) et au moins une unité d'évaluation numérique (313) ; et
**en ce que** le système (100) comprend au moins une unité d'ordinateur (130) disposée au site de mesure (1) et **en ce que** le réseau de données (20) transmet la chaîne de mesure numérique (310) à ladite unité d'ordinateur (130).

2. Système (100) selon la revendication 1, **caractérisé en ce que** chaque élément de mesure physique (11, 12, 13) est un TEDS (Transducer Electronic Data Sheet, anglais pour fiche de données électronique de transducteur) comme identificateur (11*, 12*, 13*) ; **en ce que** le moyen d'identification (110) détecte automatiquement le code d'identification (11', 12', 13') stocké dans le TEDS de chaque élément de mesure physique (11, 12, 13) ; **en ce que** le réseau de données (20) transmet automatiquement les codes d'identification (11', 12', 13') détectés à l'unité de traitement des données (120) ; **en ce que** le logiciel (122) est conçu pour lire automatiquement, pour les TEDS transmises, les données de l'élément de mesure (124) de la mémoire de données (123) et pour générer automatiquement une chaîne de mesure numérique (310) en utilisant les données de l'élément de mesure (124) lues ; et **en ce que** le réseau de données (20) transmet automatiquement la chaîne de mesure numérique (310) à l'unité d'ordinateur (130).

3. Système (100) selon l'une quelconque des revendications 1 ou 2, **caractérisé en ce que** l'unité d'ordinateur (130) comprend au moins un processeur de données d'ordinateur (131) comprenant au moins un logiciel d'ordinateur (132) et au moins un moyen d'entrée d'ordinateur (135) ; **en ce qu'**au moins un site de fonctionnement (137) peut être saisi par l'intermédiaire dudit moyen d'entrée d'ordinateur (13); **en ce que** le logiciel d'ordinateur (132) est conçu pour extraire automatiquement au moins un paramètre de configuration (139) de la chaîne de mesure numérique (310) transmise pour le site de fonctionnement (137) saisi.

4. Système (100) selon la revendication 3, **caractérisé en ce que** le site de fonctionnement (137) comprend au moins un des éléments de données suivants :
- une plage de dimensions du site de fonctionnement (137) entre un site de fonctionnement (137) le plus petit et un site de fonctionnement (137) le plus grand ;
- une plage de fréquences du site de fonctionnement (137) entre un site de fonctionnement (137) le plus lent et un site de fonctionnement (137) le plus rapide ;
- une plage de températures du site de fonctionnement (137) entre un site de fonctionnement (137) le plus froid et un site de fonctionnement (137) le plus chaud.

5. Système (100) selon la revendication 4, **caractérisé en ce que** la chaîne de mesure numérique (310) transmise comprend les données de l'élément de mesure (124) concernant les plages de mesure du capteur physique (11) ; **en ce que** le logiciel d'ordinateur (132) est conçu pour extraire, pour la plage de dimensions du site de fonctionnement (137) saisie, en tant que paramètre de configuration (139) une meilleure plage de mesure (1392) du capteur physique (11) à partir des plages de mesure du capteur physique (11), dans laquelle meilleure plage de mesure (1392) un site de fonctionnement (137) le plus grand ne dépasse pas la valeur de la pleine échelle de la meilleure plage de mesure (1392) et dans laquelle meilleure plage de mesure (1392) le capteur physique (11) mesure également le site de fonctionnement (137) le plus petit avec la résolution la plus élevée possible.

6. Système (100) selon la revendication 5, **caractérisé en ce que** la chaîne de mesure numérique (310) transmise comprend des données d'élément de mesure (124) concernant les sensibilités par lesquelles le capteur physique (11) mesure la valeur de mesure physique dans différentes plages de mesure ; et **en ce que** le logiciel d'ordinateur (132) est conçu pour extraire en tant que paramètre de configuration (139), à partir des sensibilités du capteur physique (11), une meilleure sensibilité (1398) dans la meilleure plage de mesure (1392) du capteur physique (11).

7. Système (100) selon la revendication 5, **caractérisé en ce que** le capteur physique (11) est un capteur piézoélectrique ; **en ce que** la chaîne de mesure numérique (310) transmise comprend des données d'élément de mesure (124) relatives aux magnitudes de la force de précharge du capteur piézoélectrique ; et **en ce que** le logiciel d'ordinateur (132) est conçu pour extraire, pour la plage de dimensions du site de fonctionnement (137) saisie, une meilleure magnitude de la force de précharge (1396) du capteur piézoélectrique à partir des données de l'élément de mesure (124) concernant les magnitudes de la force de précharge du capteur piézoélectrique, laquelle meilleure magnitude de la force de précharge (1396) ajoutée au site de fonctionnement (137) le plus grand est sensiblement égale à la valeur de la pleine échelle de la meilleure plage de mesure (1392).

8. Système (100) selon la revendication 7, **caractérisé en ce que** la chaîne de mesure numérique (310) transmise comprend des données d'élément de mesure (124) concernant les sensibilités par lesquelles le capteur physique (11) mesure la valeur de mesure physique à différentes magnitudes de la force de précharge ; et **en ce que** le logiciel d'ordinateur (132) est conçu pour extraire comme paramètre de configuration (139), à partir des sensibilités du capteur physique (11), une meilleure sensibilité (1399) à la meilleure magnitude de la force de précharge (1396) du capteur physique (11).

9. Système (100) selon la revendication 5, **caractérisé en ce que** la chaîne de mesure numérique (310) transmise comprend des données d'élément de mesure (124) concernant les imprécisions de mesure les plus petites prévalant dans différentes plages de mesure du capteur physique (11) et concernant les imprécisions de mesure les plus petites de l'unité d'évaluation physique (13) prévalant pour différentes valeurs de mesure physiques ; et **en ce que** le logiciel d'ordinateur (132) est conçu pour extraire, à partir des imprécisions de mesure les plus petites du capteur physique (11) prévalant dans différentes plages de mesure et à partir des imprécisions de mesure les plus petites de l'unité d'évaluation physique (13) prévalant pour différentes valeurs de mesure physiques, en tant que paramètre de configuration (139) pour la meilleure plage de mesure (1392) une meilleure imprécision de mesure la plus petite (1394) du capteur physique (11) et pour le site de fonctionnement (137) une meilleure imprécision de mesure la plus petite (1400) de l'unité d'évaluation physique (13).

10. Système (100) selon la revendication 4, **caractérisé en ce que** le capteur physique (11) est un capteur piézoélectrique ; **en ce que** la chaîne de mesure numérique (310) transmise comprend des données d'élément de mesure (124) concernant les coefficients de température de la sensibilité du capteur piézoélectrique ; **en ce que** les coefficients de température de la sensibilité sont un développement mathématique en série; et **en ce que** le logiciel d'ordinateur (132) est conçu pour extraire comme paramètre de configuration (139), pour la plage de températures du site de fonctionnement (137) saisie, à partir du développement mathématique en série un meilleur coefficient de température de la sensibilité (1395) du capteur piézoélectrique, lequel meilleur coefficient de température de la sensibilité (1395) est efficace dans la plage de températures du site de fonctionnement (137).

11. Système (100) selon la revendication 4, **caractérisé en ce que** la chaîne de mesure numérique (310) transmise comprend des données d'élément de mesure (124) concernant les valeurs d'écart de linéarité, y compris l'hystérésis, du capteur physique (11) ; et **en ce que** le logiciel d'ordinateur (132) est conçu pour extraire, pour la plage de dimensions du site de fonctionnement (137) saisie, à partir des valeurs d'écart de linéarité, y compris l'hystérésis, du capteur physique (11) une meilleure valeur d'écart de linéarité, y compris l'hystérésis, (1393) du capteur physique (11), laquelle meilleure valeur d'écart de linéarité, y compris l'hystérésis, (1393) se trouve dans la plage de dimensions du site de fonctionnement (137) pour la résolution la plus élevée possible.

12. Système (100) selon la revendication 4, **caractérisé en ce que** le capteur physique (11) est un capteur piézoélectrique ; **en ce que** l'unité d'évaluation physique (13) comprend un amplificateur de charge dans le capteur piézoélectrique ; **en ce que** la chaîne de mesure numérique (310) transmise comprend des données d'élément de mesure (124) relatives aux constantes de temps de l'amplificateur de charge ; et **en ce que** le logiciel d'ordinateur (132) est conçu pour extraire comme paramètre de configuration (139), pour la plage de fréquences du site de fonctionnement (137) saisie, à partir des constantes de temps de l'amplificateur de charge une meilleure constante de temps (1391) de l'amplificateur de charge qui résulte en une dérive de charges la plus petite pour la plage de fréquences du site de fonctionnement (137).

13. Système (100) selon la revendication 4, **caractérisé en ce que** le capteur physique (11) est un capteur piézoélectrique ; **en ce que** l'unité d'évaluation physique (13) comprend un amplificateur de charge dans le capteur piézoélectrique ; **en ce que** la chaîne de mesure numérique (310) transmise comprend des données d'élément de mesure (124) relatives aux constantes de temps de l'amplificateur de charge ; et **en ce que** le logiciel d'ordinateur (132) est conçu pour extraire comme paramètre de configuration (139), pour la plage de fréquences du site de fonctionnement (137) saisie, à partir des constantes de temps de l'amplificateur de charge une meilleure constante de temps (1401) de l'amplificateur de charge qui ne forme pas une limite de fréquence inférieure dans la plage de fréquences du site de fonctionnement (137).

14. Système (100) selon la revendication 4, **caractérisé en ce que** le capteur physique (11) est un capteur piézoélectrique ; **en ce que** l'unité d'évaluation physique (13) comprend un amplificateur de charge dans le capteur piézoélectrique ; **en ce que** le moyen de transmission physique (12) est un câble de signal ; **en ce que** la chaîne de mesure numérique (310) transmise comprend des données d'élément de mesure (124) concernant les valeurs de l'alimentation en courant électrique de l'amplificateur de charge par l'intermédiaire du câble de signal ; et **en ce que** le logiciel d'ordinateur (132) est conçu pour extraire comme paramètre de configuration (139), pour la plage de fréquences du site de fonctionnement (137) saisie, à partir des valeurs de l'alimentation en courant électrique de l'amplificateur de charge par l'intermédiaire du câble de signal une meilleure valeur de l' alimentation en courant électrique (1402) de l'amplificateur de charge par l'intermédiaire du câble de signal qui, pour la capacité du câble de signal dans la plage de fréquences du site de fonctionnement (137), ne forme pas une limite de fréquence supérieure.

15. Système (100) selon l'une quelconque des revendications 3 à 14, **caractérisé en ce que** le logiciel d'ordinateur (132) est conçu pour configurer automatiquement la chaîne de mesure physique (10) par le paramètre de configuration (139).
